# EUROPEAN PATENT SPECIFICATION

(11) **EP 1 829 515 B1**
(45) Date of publication and mention of the grant of the patent: **02.09.2009**
(21) Application number: 06119996.4
(22) Date of filing: 28.04.2004
(51) Int. Cl.: A61F 15/00, A61F 13/28, A61F 13/26, A61M 35/00, A45D 34/04

(54) **Container and applicator for pharmaceutical or cosmetic products**
Behälter und Auftrageinrichtung fuer pharmazeutische oder kosmetische Produkte
Conteneur et applicateur pour produits pharmaceutique ou cosmetique

(30) Priority: 29.04.2003 US 425791
(43) Date of publication of application: 05.09.2007
(62) Divisional of application: 04010123.0
(73) Proprietor: Tsaur, Garry, Rowland Heights, CA 91748 (US)
(72) Inventor: Tsaur, Garry, Rowland Heights, CA 91748 (US)
(74) Representative: Viering, Hans-Martin

(56) References cited:
- EP-A- 1 234 871
- US-A- 4 799 815
- US-A- 5 364 792

## Description

### BACKGROUND-FIELD OF INVENTION

### 1. Field of the invention

The present invention relates to a small sealed container and an applicator. More specifically, the present invention relates to a small slender container designed to be used with an applicator such as a cotton swab.

### BACKGROIJND-DESCRIPTION OF RELATED ART

Small containers in the general form of an elongated tube may be used to distribute and/or apply small quantities of products such as creams, lotions, and make-ups. The small container's contents are generally difficult to extract, particularly if the viscosity of the content is high. Therefore, either the remaining contents are disposed of or some form of applicator or extractor must be used to extract the contents.

Often, an applicator is required to retrieve and accurately apply the content of the container to the desired location. The applicator is generally a separate component that is inserted into the container to retrieve the content and then applied to the desired location. Some applicators are incorporated into the cap of the container such that when the cap is removed, the applicator is exposed and can be used to retrieve and apply the content of the container. Other applicators are completely separate from the container such that it is not a part of the container.

US Patent No. 5,702,035, Slender Tubular Container with Opening and Closing Means, is one of applicant's patented containers and is one example of a container with applicator for liquids. A more effective design is required for high viscosity contents.

EP-A-1 234 871 describes a swab assembly comprising an external housing formed from two interengageable housing parts.

### Summary of the invention

The present invention provides a container and applicator according to claim 1. Further embodiments of the container and applicator according to the present invention are described in the dependent claims. The container and applicator can be made small and slender and may be used to store small quantity of substance, such as creams, lotions; and make-ups in a sealed environment and easily and sanitarily dispenses its content for application as desired. The content of the slender container may be permanently sealed with a high viscosity substance such as silicone. The applicator may be used to apply the contents to the desired location. After application, the sealed compartment and the applicator are disposed of.

### Brief description of the drawings

Figure 1 shows an embodiment of the container and applicator.
Figure 2 shows another embodiment of the container and applicator.
Figure 3 shows another embodiment of the container and applicator.
Figure 4 shows another embodiment of the container and applicator.
Figure 5 shows another embodiment of the container and applicator.
Figure 6 shows another embodiment of the container and applicator.
Figure 7a shows another embodiment of the container and applicator.
Figure 7b shows another embodiment of the container and applicator.
Figure 8 shows another embodiment of the container and applicator.
Figure 9 shows another embodiment of the container and applicator.

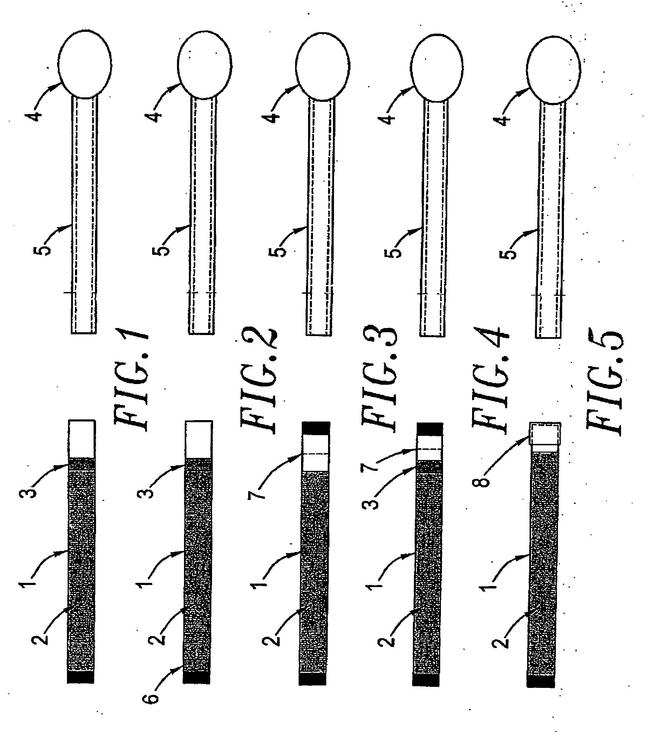

Figs. 1 to 7 do not show a container and applicator according to the present invention.

### Detailed description of the preferred embodiment

Figure 1 shows an embodiment of the container and applicator. This embodiment of the container and applicator comprises an elongated housing 1 with a first sealed end and a second open end. A substance 2 such as cream, lotion, make-up, or other liquid is contained within the elongated housing 1 near the first sealed end. If the substance 2 is evaporative, a high viscosity sealer 3 such as silicone may be used to separate the substance 2 from the second open end to prevent evaporation. An applicator 4 is affixed to the first end of a hollow tube 5. When the second end of the hollow tube 5 with the applicator 4 is inserted into the elongated housing 1, the contents of the elongated housing 1 will be forced into the applicator 4 through the hollow tube 5 with the applicator 4 due to the displacement of the content in the elongated housing 1 by the inserted hollow tube 5.

Figure 2 shows another embodiment of the container and applicator. In this embodiment, the container and applicator comprises an elongated housing 1 with a first sealed end and a second open end. A substance 2 such as cream, lotion, make-up, or other liquid is contained within the elongated housing 1 near the first sealed end separated from the first sealed end with a high viscosity substance 6 such as silicone. If the substance 2 is evaporative, another high viscosity sealer 3 such as silicone may be used to separate the substance 2 from the second open end to prevent evaporation. An applicator 4 is affixed to the first end of a hollow tube 5. When the second end of the hollow tube 5 with the applicator 4 is inserted into the elongated housing 1, the contents of the elongated housing 1 will be forced into the applicator 4 through the hollow tube 5 with the applicator 4 due to the displacement of the content in the elongated housing 1 by the inserted hollow tube 5. The high viscosity substance 6 near the first sealed end is the last to enter the hollow tube 5 and is designed to force the remaining content of the elongated housing 1 out of the inserted hollow tube 5 and into the applicator 4.

Figure 3 shows another embodiment of the container and applicator. In this embodiment, the container and applicator comprises an elongated housing 1 with a first sealed end and a second sealed end with an opening means 7 near the second sealed end. A substance 2 such as cream, lotion, make-up, or other liquid is contained within the elongated housing 1 near the first sealed end. An applicator 4 is affixed to the first end of a hollow tube 5. When the second end of the hollow tube 5 with the applicator 4 is inserted into the elongated housing 1 after the elongated housing 1 is opened through the opening means 7 near the second sealed end of the elongated housing 1, the contents of the elongated housing 1 will be forced into the applicator 4 through the hollow tube 5 with the applicator 4 due to the displacement of the content in the elongated housing 1 by the inserted hollow tube 5.

Figure 4 shows another embodiment of the container and applicator. In this embodiment, the container and applicator comprises an elongated housing 1 with a first sealed end and a second sealed end with an opening means 7 near the second sealed end. A substance 2 such as cream, lotion, make-up, or other liquid is contained within the elongated housing 1 near the first sealed end. If the substance 2 has low viscosity, a high viscosity sealer 3 such as silicone may be used to separate the substance 2 from the second sealed end to retain the substance 2 near the first sealed end. An applicator 4 is affixed to the first end of a hollow tube 5. When the second end of the hollow tube 5 with the applicator 4 is inserted into the elongated housing 1 after the elongated housing 1 is opened through the opening means 7 near the second sealed end of the elongated housing 1, the contents of the elongated housing 1 will be forced into the applicator 4 through the hollow tube 5 with the applicator 4 due to the displacement of the content in the elongated housing I by the inserted hollow tube 5.

Figure 5 shows another embodiment of the container and applicator. In this embodiment, the container and applicator comprises an elongated housing 1 with a first sealed end and a second end with an opening means 8 such as a screw-on cap. A substance 2 such as cream, lotion, make-up, or other liquid is contained within the elongated housing 1 near the first sealed end. An applicator 4 is affixed to the first end of a hollow tube 5. When the second end of the hollow tube 5 with the applicator 4 is inserted into the elongated housing 1 after the elongated housing 1 is opened through the opening means 8 at the second end of the elongated housing 1, the contents of the elongated housing will be forced into the applicator 4 through the hollow tube 5 with the applicator 4 due to the displacement of the content in the elongated housing 1 by the inserted hollow tube 5.

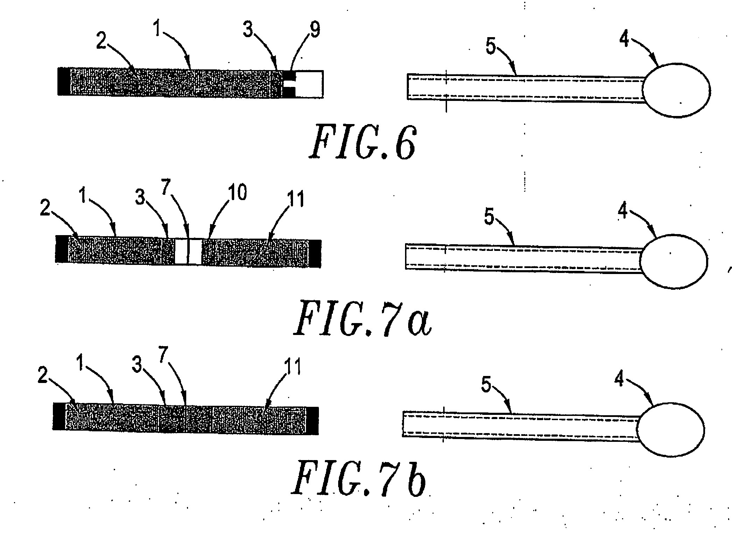

Figure 6 shows another embodiment of the container and applicator. In this embodiment, the container and applicator comprises an elongated housing 1 with a first sealed end and a second open end. A substance 2 such as cream, lotion, make-up, or other liquid is contained within the elongated housing 1 near the first sealed end. If the substance 2 is evaporative, a high viscosity sealer 3 such as silicone may be used to separate the substance 2 from the second open end to prevent evaporation. A plug 9 with a hole through its center is placed immediately next to the substance 2 or the high viscosity sealer 3, if one is utilized. An applicator 4 is affixed to the first end of a hollow tube 5. When the second end of the hollow tube 5 with the applicator 4 is inserted into the elongated housing 1, the hollow tube 5 will force the plug 9 to apply pressure and scrub the contents of the elongated housing 1 from the inside walls of the elongated housing 1 to fully force all the contents into the applicator 4 through the hollow tube 5 with the applicator 4 due to the displacement of the content by the inserted hollow tube 5.

Figure 7a shows another embodiment of the container and applicator. In this embodiment, the container and applicator comprises an elongated housing 1 with a first sealed end and a second sealed end with an opening means 7 between the first sealed end and the second sealed end. A substance 2 such as cream, lotion, make-up, or other liquid is contained within the elongated housing 1 near the first sealed end separated from the opening means 7 with a high viscosity substance 3 such as silicone. A substance 11 such as cream, lotion, make-up, or other liquid is contained within the elongated housing 1 near the second sealed end separated from the opening means 7 with a high viscosity substance 10 such as silicone. An applicator 4 is affixed to the first end of a hollow tube 5. When the second end of the hollow tube 5 with the applicator 4 is inserted into either end of the elongated housing 1 after the elongated housing 1 is opened through the opening means 7, the contents of the elongated housing 1 will be forced into the applicator 4 through the hollow tube 5 with the applicator 4 due to the displacement of the content in the elongated housing 1 by the inserted hollow tube 5. The substance 2 in elongated housing 1 near the first sealed end may be the same as or a different substance than the substance 11 near the second sealed end.

Figure 7b shows another embodiment of the container and applicator. In this embodiment, the container and applicator comprises an elongated housing 1 with a first sealed end and a second sealed end with an opening means 7 between the first sealed end and the second sealed end. A substance 2 such as cream, lotion, make-up, or other liquid is contained within the elongated housing 1 near the first sealed end separated from substance 11 near the second sealed end with a high viscosity substance 3 such as silicone with an opening means 7 at the location of the high viscosity substance 3. An applicator 4 is affixed to the first end of a hollow tube 5. When the second end of the hollow tube 5 with the applicator 4 is inserted into either end of the elongated housing 1 after the elongated housing 1 is opened through the opening means 7, the contents of the elongated housing 1 will be forced into the applicator 4 through the hollow tube 5 with the applicator 4 due to the displacement of the content in the elongated housing 1 by the inserted hollow tube 5. The substance 2 in elongated housing 1 near the first sealed end may be the same as or a different substance than the substance 11 near the second sealed end.

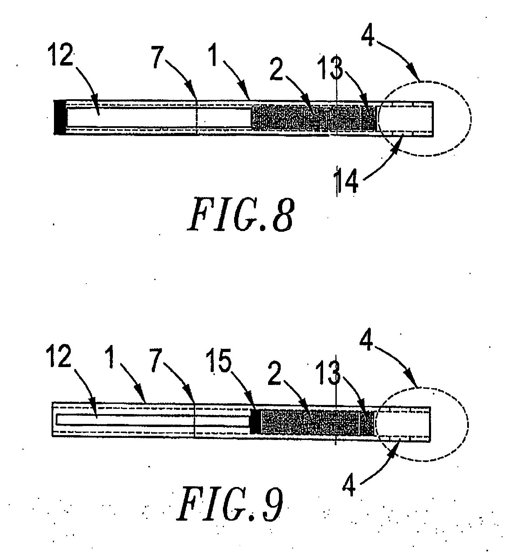

Figure 8 shows another embodiment of the container and applicator. In this embodiment, the container and applicator comprises an elongated housing 1 with a first sealed end and a second open end. One or more small holes 14 are located on the elongated housing 1 near the second open end. An elongated member 12 with at least one sealed end is inserted into the elongated housing 1 and rests on the first sealed end. An opening means 7 on the elongated housing 1 is located at a predetermined location along the position of the elongated member 12. A substance 2 such as cream, lotion, make-up, or other liquid is contained within the elongated housing 1 near the sealed end of the elongated member 12. If the substance 2 is evaporative, a high viscosity sealer 13 such as silicone may be used to separate the substance 2 from the second open end to prevent evaporation. An applicator 4 may be affixed to the second open end of the elongated housing 1. When the elongated housing 1 is opened through the opening means 7, the elongated member 12 is exposed and can be depressed to extract the content of the elongated housing 1 into the applicator 4.

Figure 9 shows another embodiment of the container and applicator. In this embodiment, the container and applicator comprises an elongated housing 1 with a first open end and a second open end. One or more small holes 14 are located on the elongated housing 1 near the second open end. An elongated member 12 is inserted into the elongated housing 1 and positioned near the first open end. An opening means 7 on the elongated housing 1 is located at a predetermined location along the position of the elongated member 12. A stopper 15 is attached to the end of the elongated member 12 near the second open end. A substance 2 such as cream, lotion, make-up, or other liquid is contained within the elongated housing 1 near the stopped 15 at the end of the elongated member 12. If the substance 2 is evaporative, a high viscosity sealer 13 such as silicone or a rubber stopper may be used to separate the substance 2 from the second open end to prevent evaporation. An applicator 4 may be affixed to the second open end of the elongated housing 1. When the elongated housing 1 is opened through the opening means 7, the elongated member 12 is exposed and can be depressed to extract the content of the elongated housing 1 into the applicator 4 through the one or more holes 14 near the end of the second open end.

According to an embodiment of the invention, a container and applicator comprises an elongated housing with a first sealed or open end and a second open end, wherein an elongated member with at least one sealed end is inserted into the elongated housing, the elongated member resting on the first sealed end of the elongated housing or being positioned near the first open end of the elongated housing, an opening means on the elongated housing located at a predetermined location along the position of the elongated member, a substance contained within the elongated housing near the sealed end of the elongated member and an applicator affixed to the second open end of the elongated housing wherein when the elongated housing is opened through the opening means, the elongated member is exposed and can be depressed to extract the content of the elongated container into the applicator. In the first aspect, preferably, a first stopper is placed next to the substance near the second open end to seal the substance in the elongated housing and one or more holes are defined near the second open end of the elongated housing to allow extraction of the substance into the applicator. In this respect, preferably, a second stopper is placed between the sealed end of the elongated member and the substance.

Although the description above contains many specificities, these should not be construed as limiting the scope of the invention but as merely providing illustrations of some of the presently preferred embodiments of this invention. Thus the scope of the invention should be determined by the appended claims and their legal equivalents, rather than by the examples given.

## Claims

1. A container and applicator comprising an elongated housing (1) with a first end and a second open end, an elongated member (12) with at least one sealed end is inserted into the elongated housing (1) and rests on the first sealed end, an opening means (7) on the elongated housing (1) located at a predetermined location along the position of the elongated member (12), a substance (2) contained within the elongated housing (1) near the sealed end of the elongated member (12) and an applicator (4) affixed to the second open end of the elongated housing (1) wherein when the elongated housing (1) is opened through the opening means (7), the elongated member (12) is exposed and can be depressed to extract the content of the elongated container into the applicator (4).

2. A container and applicator as in claim 1, wherein a first stopper (13) is placed next to the substance (2) near the second open end to seal the substance (2) in the elongated housing (1) and one or more holes (14) are defined near the second open end of the elongated housing (1) to allow extraction of the substance (2) into the applicator (4).

3. A container and applicator as in claim 2 , wherein a second stopper (15) is placed between the sealed end of the elongated member (12) and the substance (2).

## Patentansprüche

1. Behälter und Auftrageinrichtung, aufweisend ein verlängertes Gehäuse (1) mit einem ersten Ende und einem zweiten offenen Ende, wobei ein verlängertes Element (12) mit wenigstens einem abgedichteten Ende in das verlängerte Gehäuse (1) eingesetzt ist und an dem ersten abgedichteten Ende aufliegt, ein Öffnungsmittel (7) an dem verlängerten Gehäuse (1) an einer vorbestimmten Stelle entlang der Position des verlängerten Elements (12) liegt, eine Substanz (2) nahe dem abgedichteten Ende des verlängerten Elements (12) in dem verlängerten Gehäuse (1) enthalten ist, und eine Auftrageinrichtung (4) an dem zweiten offenen Ende des verlängerten Gehäuses (1) befestigt ist, wobei, wenn das verlängerte Gehäuse (1) mittels des Öffnungsmittels (7) geöffnet ist, das verlängerte Element (12) freigelegt ist und niedergedrückt werden kann, um den Inhalt des verlängerten Behälters in die Auftrageinrichtung (4) zu extrahieren.

2. Behälter und Auftrageinrichtung nach Anspruch 1, wobei ein erster Stopper (13) neben der Substanz (2) nahe dem zweiten offenen Ende platziert ist, um die Substanz (2) in dem verlängerten Gehäuse (1) abzudichten, und ein oder mehrere Löcher (14) nahe dem zweiten offenen Ende des verlängerten Gehäuses (1) definiert sind, um eine Extraktion der Substanz (2) in die Auftrageinrichtung (4) zu ermöglichen.

3. Behälter und Auftrageinrichtung nach Anspruch 2, wobei ein zweiter Stopper (15) zwischen dem abgedichteten Ende des verlängerten Elements (12) und der Substanz (2) platziert ist.

## Revendications

1. Conteneur et applicateur comprenant un boîtier allongé (1) avec une première extrémité et une deuxième extrémité ouverte, un élément allongé (12) avec au moins une extrémité fermée de manière étanche est inséré dans le boîtier allongé (1) et repose sur la première extrémité fermée de manière étanche, un moyen d'ouverture (7) sur le boîtier allongé (1) situé à un emplacement prédéterminé le long de la position de l'élément allongé (12), une substance (2) contenue dans le boîtier allongé (1) à proximité de l'extrémité fermée de manière étanche de l'élément allongé (12) et un applicateur (4) fixé à la deuxième extrémité ouverte du boîtier allongé (1) où lorsque le boîtier allongé (1) est ouvert à travers les moyens d'ouverture (7), l'élément allongé (12) est exposé et peut être comprimé pour extraire le contenu du conteneur allongé dans l'applicateur (4).

2. Conteneur et applicateur selon la revendication 1, où une première butée (13) est placée à côté de la substance (2) à proximité de la deuxième extrémité ouverte pour enfermer de manière étanche la substance (2) dans le boîtier allongé (1) et un ou plusieurs orifices (14) sont définis à proximité de la deuxième extrémité ouverte du boîtier allongé (1) pour permettre l'extraction de la substance (2) dans l'applicateur (4).

3. Conteneur et applicateur selon la revendication 2, où une deuxième butée (15) est placée entre l'extrémité fermée de manière étanche de l'élément allongé (12) et la substance (2).
